# EUROPÄISCHE PATENTANMELDUNG

(11) **EP 3 968 252 A1**
(43) Veröffentlichungstag der Anmeldung: **16.03.2022**
(21) Anmeldenummer: 21020459.0
(22) Anmeldetag: 13.09.2021
(51) Int. Cl.: G06Q 20/32, G06Q 20/34, G07F 7/10

(54) **VERFAHREN ZUM BETREIBEN EINER ZAHLUNGSKARTE**

(30) Priorität: 14.09.2020 DE 102020005605
(71) Anmelder: Giesecke+Devrient Mobile Security GmbH, 81677 München (DE)
(72) Erfinder: Seemüller, Klemens, 85386 Eching (DE); Baldischweiler, Michael, 81825 München (DE)
(74) Vertreter: Giesecke + Devrient IP

(57) **Zusammenfassung**

Vorgeschlagen wird ein Verfahren zum Betreiben einer Zahlungskarte (10) ohne Nutzer-Authentisierung. Die Zahlungskarte (10) umfasst einen Controller (11) zur Ermittlung einer Transaktion mit einem Zahlungsterminal (20) sowie zur Durchführung von Sicherheitsmaßnahmen basierend auf der Anzahl an Transaktionen Weiter umfasst sie eine Kommunikationseinheit (12), um kontaktlos mit dem Zahlungsterminal (20) eine erste, auf eine Transaktion bezogene Information, auszutauschen und mit einem Nutzerendgerät (30) eine zweite Information, die sich auf eine Anzahl von mit der Zahlungskarte (10) durchführbaren Transkationen bezieht. Weiter umfasst die Zahlungskarte (5) einen Speicher (13) zur Speicherung der Anzahl an durchgeführten oder noch durchführbaren Transaktionen. Die Anzahl wird auf einen vorgegebenen Wert gesetzt und in dem Speicher (13) als Transaktionszähler gespeichert, indem der vorgegebene Wert als die zweite Information von dem Nutzerendgerät (30) an die Zahlungskarte (10) übertragen wird. Die Durchführung einer Transkation der Zahlungskarte (10) mit dem Zahlungsterminal (20) wird durch Auswertung der ersten Information durch den Controller (11) festgestellt. Der Transaktionswert in dem Speicher (13) wird durch den Controller heruntergezählt. Beim Erreichen eines vorgegebenen Endwerts ist eine Aktivierung des Transaktionswert erforderlich.

## Beschreibung

Die Erfindung betrifft ein Verfahren zum Betreiben einer Zahlungskarte ohne Nutzer-Authentisierung sowie eine Zahlungskarte.

Zahlungskarten, wie z.B. Debitkarten oder Kreditkarten, werden von Nutzern in großem Umfang für bargeldlose Zahlungen bei verschiedenen Händlern oder Dienstleistern verwendet. Häufig sind die Zahlungskarten mit einer Kontaktloszahlfunktion ausgestattet, welche es erlaubt, Abbuchungen bis zur Höhe eines bestimmten Betrages ohne Freigabe, d.h. ohne eine Nutzer-Authentisierung, z.B. über eine PIN (Personal Identification Number), vorzunehmen. Die Höhe des Betrages, bis zu dem keine Freigabe erforderlich ist, wird in der Regel durch die Herausgeber der Karte bestimmt und liegt typischerweise in einem Bereich zwischen 25 EUR und 50 EUR. Zur Nutzung einer kontaktlosen Zahlungskarte ist es ausreichend, die Zahlungskarte an ein entsprechendes Zahlungsterminal zu halten, wobei bei ausreichender Nähe zwischen der Zahlungskarte und dem Zahlungsterminal mittels Nahfeldkommunikation eine Bezahlfunktion durchgeführt wird. Die Abrechnung einer mit der Zahlungskarte in Anspruch genommenen Dienstleistung, z.B. der Nutzung eines ÖPNV (Öffentlich-Privater Nahverkehr)-Verkehrsmittels, oder eines Einkaufs erfolgt direkt über die Kontaktlos-Bezahlfunktion.

Der hohe Komfort für den Nutzer bringt jedoch einen Nachteil beim Verlust der Zahlungskarte mit sich. Solange die Zahlungskarte nicht gesperrt ist, kann der Finder die Zahlungskarte weiter nutzen, solange er Transaktionen unterhalb der durch den Zahlungskartenherausgeber festgelegten Schwelle durchführt. Hierdurch kann für den eigentlichen Inhaber der Zahlungskarte ein nicht unerheblicher monetärer Schaden entstehen.

Aus der US 2016/0 171 369 A1 ist eine Zahlungskarte mit Anti-Skimming-Funktionen bekannt, bei der die Anzahl von Lesevorgängen durch ein Lesegerät durch einen Nutzer, z.B. mittels eines persönlichen Nutzerendgeräts, vorgegeben werden kann. Bei jeder Nutzung der Zahlungskarte wird der Zähler heruntergezählt, wobei beim Erreichen eines Endwerts eine neue Aktivierung erforderlich ist. Die Zahlungskarte verfügt hierzu über einen Lesesensor und einen Emulator eines Magnetstreifens, wobei mittels des Lesesensors die Anzahl der Lesevorgänge ermittelt und basierend auf der Anzahl der Lesevorgänge die Zahlungskarte deaktiviert wird. Der Magnetstreifenemulator emuliert eine Signalfolge eines Magnetstreifens der Zahlungskarte, wenn ein Lesevorgang durch ein Kartenlesegerät erfolgt. Ist die vorgegebene Anzahl an Lesevorgängen, die durch den Lesesensor ermittelt wurde, erreicht, wird der Magnetstreifenemulator deaktiviert, so dass das Kartenlesegerät beim Hindurchziehen der Karte durch das Lesegerät keine entsprechende auszulesende Signalfolge erhält. Durch die in der US 2016/0 171 369 A1 beschriebene Zahlungskarte wird ein hoher Schutz gegen Missbrauch bereitgestellt. Allerdings erfordert die Zahlungskarte das Hinzufügen zusätzlicher Sensoren und eines leistungsfähigen Controllers sowie eines Magnetstreifenemulators, was die Zahlungskarte als solches teuer macht. Darüber hinaus kann der Schutz nicht auf weit verbreitete herkömmliche Zahlungskarten, wie z.B. Girokarten, Debitkarten, Kreditkarten, Karten von ÖPNV-Betreibern und dergleichen, angewandt werden.

Es ist Aufgabe der Erfindung, ein Verfahren anzugeben, mit der das Betreiben einer herkömmlichen Zahlungskarte ohne Nutzer-Authentisierung verbessert werden kann. Eine weitere Aufgabe besteht darin, eine funktionell verbesserte Zahlungskarte anzugeben.

Diese Aufgaben werden gelöst durch die Merkmale der unabhängigen Ansprüche. Vorteilhafte Ausgestaltungen ergeben sich aus den abhängigen Ansprüchen.

Gemäß einem ersten Aspekt wird ein Verfahren zum Betreiben einer Zahlungskarte ohne Nutzer-Authentisierung vorgeschlagen. Bei der Zahlungskarte kann es sich um eine Debitkarte, eine Kreditkarte, eine von einem Verkehrsmittelbetreiber herausgegebene Zahlungskarte oder eine von beliebigen anderen Händlern herausgegebene individuelle Zahlungskarte handeln. Unter dem Begriff "ohne Nutzer-Authentisierung" ist zu verstehen, dass ein Zahlungsvorgang ohne die Eingabe eines nur dem Nutzer bekannten Identifikationsnachweises, wie z.B. einer PIN oder eines Passworts, oder der Bestätigung durch ein biometrisches Merkmal, wie z.B. einem Fingerabdruck oder einer Face-ID, durchgeführt werden kann.

Die Zahlungskarte umfasst einen Controller (Prozessor oder Recheneinheit), der dazu ausgebildet ist, eine Transaktion der Zahlungskarte mit einem Zahlungsterminal zu ermitteln, und Sicherheitsmaßnahmen basierend auf der Anzahl an Transaktionen durchzuführen. Das Zahlungsterminal kann ein Kartenlesegerät, wie dies bei der Nutzung von Debitkarten oder Kreditkarten gebräuchlich ist, oder ein individuelles Zahlungsterminal des die Zahlungskarte herausgebenden Händlers sein. Sicherheitsmaßnahmen im Sinne der Erfindung sind beispielsweise die Verweigerung der Genehmigung einer Transaktion, wodurch der Kauf einer Dienstleistung oder eines Gegenstands verweigert wird.

Die Zahlungskarte umfasst ferner eine Kommunikationseinheit, die dazu ausgebildet ist, auf kontaktlose Weise mit dem Zahlungsterminal eine erste Information auszutauschen, die sich auf eine Transaktion mit der Zahlungskarte bezieht, und mit einem Nutzerendgerät eines Nutzers der Zahlungskarte eine zweite Information auszutauschen, die sich auf eine Anzahl von mit der Zahlungskarte durchführbaren Transaktionen bezieht. Zur kontaktlosen Durchführung eines Zahlungsvorganges kann die Kommunikationseinheit ein Bluetooth-Kommunikationsmodul, ein Bluetooth Low Energy (BLE)-Modul, ein Nahfeld(NFC)-Kommunikationsmodul (NFC = Near-Field Communication), ein WiFi-Kommunikationsmodul und ähnliches umfassen. Die erste Information, die sich auf eine Transaktion mit der Zahlungskarte bezieht, kann die für eine Authentifikation und Absicherung der Kommunikation zwischen der Zahlungskarte und dem Zahlungsterminal ausgetauschten Informationen, z.B. als Kommandofolge, umfassen. Die erste Information kann darüber hinaus auch eine Identifikation über den Händler, eine Identifikation der Zahlungskarte, den Zahlungsbetrag und dergleichen umfassen. Die zweite Information, die sich auf eine Anzahl von mit der Zahlungskarte durchführbaren Transaktionen bezieht, kann beispielsweise ein numerischer Wert sein, der der Anzahl entspricht, die einschließlich der aktuellen oder ohne die aktuelle Transaktion noch mit der Zahlungskarte erfolgreich durchgeführt werden können.

Die Zahlungskarte umfasst darüber hinaus einen nicht-flüchtigen Speicher, der dazu ausgebildet ist, die Anzahl an durchgeführten oder noch durchführbaren Transaktionen zu speichern.

Das Verfahren umfasst die folgenden Schritte:
In einem Schritt a) erfolgt das Setzen der Anzahl der mit der Zahlungskarte durchführbaren Transaktionen auf einen vorgegebenen Wert, indem der durch den Nutzer vorgegebene Wert als die zweite Information von dem Nutzerendgerät an die Zahlungskarte übertragen wird. Das Setzen der Anzahl an durchführbaren Transaktionen erfolgt somit durch den Nutzer. Der vorgegebene Wert kann wahlweise durch den Nutzer selbst ausgewählt werden oder der vorgegebene Wert kann als nicht veränderlicher Wert durch den Nutzer getriggert werden. Das Setzen der Anzahl der mit der Zahlungskarte durchführbaren Transaktionen auf den vorgegebenen Wert erfolgt beispielsweise mit Hilfe einer auf dem Nutzerendgerät gespeicherten App, d.h. einem geeigneten Programm, oder ist in das Betriebssystem des Nutzerendgeräts integriert. Das Setzen der Anzahl der mit der Zahlungskarte durchführbaren Transaktionen kann über eine vorgegebene Kommandofolge erfolgen.

In einem Schritt b) erfolgt das Speichern des vorgegebenen Werts der Anzahl an durchführbaren Transaktionen als aktueller Wert (sog. Transaktionszähler ) in dem Speicher der Zahlungskarte.

In einem Schritt c) erfolgt das Feststellen der Durchführung einer Transaktion der Zahlungskarte mit dem Zahlungsterminal, indem die erste Information, die sich auf eine Transaktion mit der Zahlungskarte bezieht, durch den Controller ausgewertet wird.

In einem Schritt d) erfolgt die Überprüfung des aktuellen Werts (Transaktionszählers) in dem Speicher durch den Controller, wobei die Transaktion eine genehmigte Transaktion ist und der aktuelle Wert (Transaktionszähler) in dem Speicher um 1 in Richtung eines vorgegebenen Endwerts verändert wird, wenn die Überprüfung des aktuellen Werts (Transaktionszählers) zum Ergebnis hat, dass der aktuelle Wert (Transaktionszählers) nicht der Endwert ist, und die Transaktion abgebrochen wird, wenn die Überprüfung des aktuellen Werts zum Ergebnis hat, dass der aktuelle Wert (Transaktionszähler) dem Endwert entspricht.

Das Verfahren zum Betreiben einer Zahlungskarte ohne Nutzer-Authentisierung wird mit herkömmlichen Zahlungskarten dadurch sicherer gemacht, dass das aus dem Stand der Technik bekannte Prinzip der Beschränkung der Anzahl der möglichen Transaktionen auf einen vorgegebenen Wert durchgeführt wird, wobei das Feststellen der Durchführung einer Transaktion durch den Prozessor der Zahlungskarte dadurch erfolgt, dass die herkömmliche Kommunikationsfolge zwischen Zahlungskarte und Zahlungsterminal detektiert wird. Dadurch kann das Verfahren mit jeder herkömmlichen kontaktlosen Zahlungskarte realisiert werden, ohne dass zusätzliche Sensoren oder andere technische Veränderungen notwendig wären.

Insbesondere wird somit ermöglicht, dass die Zahlungskarte nur eine bestimmte Anzahl an Transaktionen zulässt, die unterhalb der im ersten Schritt a) festgelegten autorisierten Anzahl liegt. Ein möglicher Schaden beim Verlust der Zahlungskarte für dessen berechtigten Besitzer kann dadurch begrenzt werden.

Eine weitere zweckmäßige Ausgestaltung sieht vor, dass eine Aktivierungsaufforderung durch den Controller erzeugt und an das Zahlungsterminal und/oder das Nutzerendgerät zur Ausgabe übertragen wird, wenn die Überprüfung des aktuellen Werts zum Ergebnis hat, dass der aktuelle Wert dem Endwert entspricht, wobei die Aktivierungsaufforderung eine an den Nutzer gerichtete Aufforderung ist, die Anzahl der mit der Zahlungskarte durchführbaren Transaktionen auf den vorgegebenen Wert zu setzen, mit anderen Worten den Transaktionszähler zurückzusetzen. Hierdurch wird sichergestellt, dass bei oder nach der letzten berechtigten Transaktion ein Hinweis an den Nutzer der Zahlungskarte erfolgt, dass der Transaktionszähler wieder auf den vorgegebenen Wert zurückgesetzt werden muss, um weiterhin eine Nutzung der Zahlungskarte zu ermöglichen. Da das Zurücksetzen des Transaktionszählers mit Hilfe eines Nutzerendgeräts des Nutzers der Zahlungskarte erfolgt, wird hier ein hohes Sicherheitsniveau erzielt. Erfolgt das Zurücksetzen des Transaktionszählers mit Hilfe einer App oder durch eine Funktion im Betriebssystem des Nutzerendgeräts, können entsprechende Sicherheitsmechanismen der App oder des Betriebssystems mitgenutzt werden. Beispielsweise kann durch das Nutzerendgerät vor dem Zurücksetzen des Transaktionszählers eine nur dem berechtigten Nutzer bekannte Information, z.B. eine PIN, oder ein biometrisches Merkmal abgefragt werden.

Eine weitere zweckmäßige Ausgestaltung sieht vor, dass in Schritt a) zusätzlich oder alternativ ein erlaubter Geldbetrag der mit der Zahlungskarte durchführbaren Transaktionen auf einen vorgegebenen Geldwert gesetzt wird, indem der durch den Nutzer vorgegebene Geldwert als die zweite Information von dem Nutzerendgerät an die Zahlungskarte übertragen wird, und der vorgegebene Geldwert in Schritt b) als aktueller Geldwert in dem Speicher gespeichert wird. Neben einer Festlegung der maximal erlaubten Anzahl an Transaktionen sieht diese Ausgestaltung vor, auch einen maximal möglichen Geldbetrag für die maximale Anzahl an Transaktionen in der Zahlungskarte zu hinterlegen. Auf diese Weise kann sich die Zahlungskarte wie eine vorbezahlte Zahlungskarte (Prepaid-Karte) verhalten, die ebenso wie der Transaktionszähler "aufgeladen" werden kann. Dabei findet jedoch kein tatsächlicher Aufladevorgang wie bei Prepaid-Karten statt, da dies durch das bestimmungsgemäße technische Prinzip der Zahlungskarte nicht erforderlich oder möglich ist. Zusätzlich wird jedoch die Sicherheit für den berechtigten Nutzer der Zahlungskarte erhöht.

Eine weitere zweckmäßige Ausgestaltung sieht vor, dass in Schritt d) zusätzlich oder alternativ der aktuelle Geldwert in dem Speicher durch den Controller überprüft wird, wobei die Transaktion eine genehmigte Transaktion ist und der aktuelle Geldwert in dem Speicher um einen Transaktionsbetrag verringert wird, wenn die Überprüfung des aktuellen Geldwerts zum Ergebnis hat, dass der aktuelle Geldwert größer als der Transaktionsbetrag ist, und wobei die Transaktion abgebrochen wird, wenn die Überprüfung des aktuellen Werts zum Ergebnis hat, dass der aktuelle Geldwert kleiner als der Transaktionsbetrag ist. Hierdurch wird sichergestellt, dass lediglich das noch auf der Zahlungskarte "verfügbare Guthaben" im Rahmen einer oder mehrerer Transaktionen von der Zahlungskarte abgebucht werden kann. Reicht das auf der Zahlungskarte festgelegte oder noch verfügbare Zahlungsguthaben nicht aus, so wird die Transaktion abgebrochen. Der berechtigte Nutzer hat dann die Möglichkeit, mit Hilfe seines Nutzerendgeräts den Zahlungsbetrag auf einen für die Transaktion oder weitere Transaktionen ausreichenden Wert zu erhöhen. Zweckmäßigerweise ist vorgesehen, dass der in dem Speicher hinterlegte initiale Zahlbetrag durch den Nutzer der Zahlungskarte frei gewählt werden kann.

Eine weitere zweckmäßige Ausgestaltung sieht vor, dass bei genehmigter Transaktion der nach der Transaktion aktuelle Wert und/oder aktuelle Geldwert an das Zahlungsterminal und/oder das Nutzerendgerät zur Ausgabe übertragen werden. Auf diese Weise kann der Nutzer bei jeder Benutzung der Zahlungskarte erkennen, wie viele Transaktionsvorgänge noch möglich sind und welcher aktuelle Geldwert (Transaktionsguthaben) ihm hierfür noch zur Verfügung steht. Dadurch ist sichergestellt, dass der berechtigte Nutzer der Zahlungskarte ausreichend früh Maßnahmen ergreifen kann, sowohl die Anzahl der möglichen Transaktionen als auch den Geldwert auf ausreichende Höhe zu setzen.

Eine weitere zweckmäßige Ausgestaltung sieht vor, dass der Schritt c) des Feststellens der Durchführung einer Transaktion der Zahlungskarte mit dem Zahlungsterminal umfasst, dass eine Authentifizierung der Zahlungskarte durch das Zahlungsterminal durchgeführt wird und/oder ein Zahlbetrag von dem Zahlungsterminal an die Zahlungskarte übertragen wird. Als zweite Information zur Feststellung der Durchführung einer Transaktion werden somit die üblicherweise bei einer Transaktion zwischen den beteiligten Kommunikationspartnern ausgeführten Nachrichten ausgewertet. Dies macht das Vorsehen zusätzlicher Sensoren oder Recheneinheiten entbehrlich.

Gemäß einem zweiten Aspekt der vorliegenden Erfindung wird ein Computerprogramm vorgeschlagen, das in den internen Speicher eines digitalen Computers geladen werden kann und Softwarecodeabschnitte umfasst, mit denen die Schritte des hierin beschriebenen Verfahrens und seiner Ausgestaltungen ausgeführt werden, wenn das Produkt auf einem Computer läuft.

Gemäß einem dritten Aspekt der vorliegenden Erfindung wird ein Computerprogrammprodukt vorgeschlagen, das direkt in den internen Speicher eines digitalen Computers geladen werden kann, und Softwarecodeabschnitte umfasst, mit denen die Schritte des hierin beschriebenen Verfahrens einschließlich seiner Ausgestaltungen ausgeführt werden, wenn das Produkt auf dem Computer läuft.

Gemäß einem vierten Aspekt der vorliegenden Erfindung wird eine Zahlungskarte vorgeschlagen, die ohne Nutzer-Authentisierung betrieben werden kann und dazu ausgebildet ist, das hierin beschriebene Verfahren und seine Ausgestaltungen auszuführen. Eine solche Zahlungskarte umfasst einen Controller, der dazu ausgebildet ist, eine Transaktion der Zahlungskarte mit einem Zahlungsterminal zu ermitteln, und Sicherheitsmaßnahmen basierend auf der Anzahl an Transaktionen durchzuführen. Die Zahlungskarte umfasst ferner eine Kommunikationseinheit, die dazu ausgebildet ist, auf kontaktlose Weise mit dem Zahlungsterminal eine erste Information auszutauschen, die sich auf eine Transaktion mit der Zahlungskarte bezieht, und mit einem Nutzerendgerät eines Nutzers der Zahlungskarte eine zweite Information auszutauschen, die sich auf eine Anzahl von mit der Zahlungskarte durchführbaren Transaktionen bezieht. Die Zahlungskarte umfasst weiter einen nicht-flüchtigen Speicher, der dazu ausgebildet ist, die Anzahl an durchgeführten oder noch durchführbaren Transaktionen zu speichern. Die Zahlungskarte ist dazu ausgebildet, eine Anzahl an mit der Zahlungskarte durchführbaren Transaktionen auf einen vorgegebenen Wert zu setzen, nachdem der durch den Nutzer vorgegebene Wert als die zweite Information von der Zahlungskarte empfangen wurde; den vorgegebenen Wert der Anzahl an durchführbaren Transaktionen als aktuellen Wert in dem Speicher zu speichern; die Durchführung einer Transaktion der Zahlungskarte mit dem Zahlungsterminal festzustellen, indem die erste Information durch den Controller ausgewertet wird; und den aktuellen Wert in dem Speicher durch den Controller zu überprüfen, wobei die Transaktion eine genehmigte Transaktion ist und der aktuelle Wert in dem Speicher um 1 in Richtung eines vorgegebenen Endwerts verändert wird, wenn die Überprüfung des aktuellen Werts zum Ergebnis hat, dass der aktuelle Wert nicht der Endwert ist, und die Transaktion abgebrochen wird, wenn die Überprüfung des aktuellen Werts zum Ergebnis hat, dass der aktuelle Wert dem Endwert entspricht. Die Zahlungskarte weist die gleichen Vorteile auf, wie diese vorstehend in Verbindung mit dem erfindungsgemäßen Verfahren beschrieben wurden.

Die Erfindung wird nachfolgend näher anhand eines Ausführungsbeispiels in der Zeichnung erläutert. Es zeigen:
- Fig. 1: eine schematische Darstellung der zur Durchführung des erfindungsgemäßen Verfahrens erforderlichen Komponenten;
- Fig. 2: ein Diagramm, das den Kommunikationsablauf zwischen der erfindungsgemäßen Zahlungskarte und einem Nutzerendgerät des Nutzers der Zahlungskarte illustriert; und
- Fig. 3: ein Diagramm, das den Kommunikationsablauf zwischen der erfindungsgemäßen Zahlungskarte und dem Zahlungsterminal illustriert.

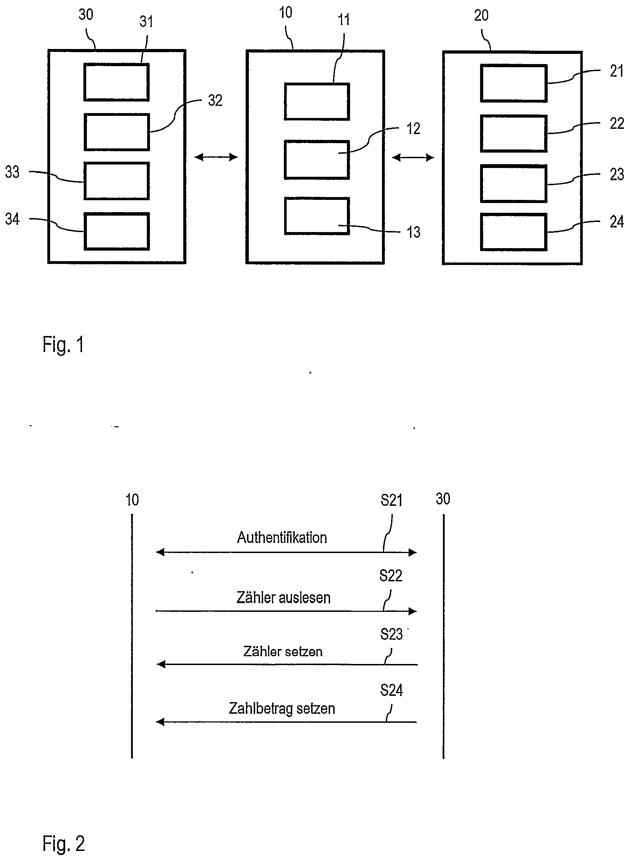

Fig. 1 zeigt eine schematische Darstellung der an der Durchführung des erfindungsgemäßen Verfahrens beteiligten Komponenten.

Mit dem Bezugszeichen 10 ist eine Zahlungskarte gekennzeichnet. Die Zahlungskarte 10 ist beispielsweise eine Debitkarte, eine Kreditkarte oder eine von einem Händler individuell herausgegebene Zahlungskarte, z.B. eines öffentlichen Nahverkehrsunternehmens und dergleichen. Die Zahlungskarte 10 ermöglicht es, Transaktionen zur Bezahlung eines Einkaufs oder einer Dienstleistung an einem Zahlungsterminal 20 des Händlers kontaktlos vorzunehmen. Die Transaktion kann dabei ohne Nutzer-Authentisierung, d.h. ohne die Eingabe eines nur dem Nutzer der Zahlungskarte 10 bekannten Identifikationsmerkmals, wie z.B. einer persönlichen Identifikationsnummer (PIN) oder eines Passworts, oder einer biometrischen Verifikation und dergleichen, durchgeführt werden.

Die Zahlungskarte 10 umfasst einen Controller 11, eine Kommunikationseinheit 12 sowie einen nicht-flüchtigen Speicher 13. Der Controller 11 ist dazu ausgebildet ist, die Transaktion der Zahlungskarte 10 mit dem Zahlungsterminal durchzuführen. Die Durchführung einer Transaktion wird ebenfalls durch den Controller 11 ermittelt. Die Kommunikationseinheit 12 umfasst z.B. ein oder mehrere Bluetooth-Kommunikationsmodule, ein Bluetooth Low Energy (BLE)-Modul, ein Nahfeld-Kommunikationsmodul (NFC-Modul), ein WiFi-Kommunikationsmodul und dergleichen. Der nicht-flüchtige Speicher 13 ist dazu ausgebildet, eine Anzahl an durchgeführten oder noch durchführbaren Transaktionen zu speichern.

Die Zahlungskarte 10 ist mittels der Kommunikationseinheit 12 nicht nur in der Lage, mit dem Zahlungsterminal 20 Informationen auszutauschen, die sich auf eine Transaktion mit der Zahlungskarte 10 bezieht (und nachfolgend als erste Information bezeichnet wird), sondern auch dazu ausgebildet, Informationen mit einem Nutzerendgerät 30 eines Nutzers der Zahlungskarte 10 auszutauschen. Die mit dem Nutzerendgerät 30 ausgetauschten Informationen stellen eine zweite Information dar und beziehen sich auf eine Anzahl von mit der Zahlungskarte 10 durchführbaren Transaktionen.

Das Zahlungsterminal 20 umfasst einen Controller 21, eine Kommunikationseinheit 22, welche in der Lage ist, mit der Zahlungskarte 10 und dessen Kommunikationseinheit Informationen auszutauschen, sowie Nutzerinteraktionsmittel, die insbesondere ein Display 23 und ein Eingabemittel 24, z.B. eine Tastatur, ein Touch-Screen, ein elektronisches Unterschriftsfeld und dergleichen, umfassen.

Die Zahlungskarte 10 stellt eine herkömmliche Zahlungskarte, wie z.B. eine Debitkarte oder eine Kreditkarte, dar, wie sie millionenfach im Umlauf ist. Das Zahlungsterminal 20 ist ein herkömmliches Zahlungsterminal, welches bei Händlern zum Einsatz kommt und in der Lage ist, eine Transaktion kontaktlos abzuwickeln, sobald die Zahlungskarte 10 aufgrund einer räumlichen Nähe eine Kommunikation mit dem Zahlungsterminal 20 durchführen kann.

Das Nutzerendgerät 30 ist insbesondere ein herkömmliches Mobilfunkendgerät, wie z.B. ein Smartphone, ein Tablet, ein Laptop und dergleichen, und umfasst insbesondere einen Controller 31, eine Kommunikationseinheit (die beispielsweise ein Bluetooth-Kommunikationsmodul, ein BLE-Modul oder ein WiFi-Kommunikationsmodul umfasst), einen Speicher 33 sowie eine Benutzerschnittstelle 34 mit Mitteln zur Eingabe von Informationen und Ausgabe von Informationen. Die Benutzerschnittstelle kann in Form eines Touchscreens, gegebenenfalls ergänzt um physikalisches Eingabemittel, realisiert sein. Ebenso kann die Benutzerschnittstelle 34 ein gesondertes Display umfassen.

Um beim Verlust der Zahlungskarte 10 zu verhindern, dass die Zahlungskarte 10 durch den Finder unbefugt und in unbegrenzter Weise zur Durchführung von Transaktionen genutzt werden kann, ist das Setzen der Anzahl der mit der Zahlungskarte 10 durchführbaren Transaktionen auf einen vorgegebenen Wert, z.B. 5 oder 7, vorgesehen. Der vorgegebene Wert wird vorzugsweise durch den Nutzer vorgegeben. Die Vorgabe erfolgt in einer auf dem Nutzerendgerät 30 des Nutzers der Zahlungskarte 10 gespeicherten App oder mittels des Betriebssystems des Nutzerendgeräts 30. Der Nutzer gibt über die Benutzerschnittstelle 34 den von ihm gewünschten Wert als vorgegebenen Wert ein. Der vorgegebene Wert wird als Kommandofolge als die zweite Information von dem Nutzerendgerät 30 an die Zahlungskarte 10 übertragen. Die Übertragung kann beispielsweise über ein Nahfeld-Kommunikationsverfahren (z.B. Bluetooth, BLE oder NFC) erfolgen. Der vorgegebene Wert wird in dem Speicher 13 der Zahlungskarte 10 als aktueller Wert hinterlegt. Der vorgegebene Wert kann wahlweise durch den Nutzer der Zahlungskarte frei gewählt werden. Alternativ kann der vorgegebene Wert durch die in dem Nutzerendgerät ablaufende App oder das Betriebssystem vorgegeben sein.

Wird die Zahlungskarte 10 in üblicher Weise zur Durchführung einer Transaktion an das Zahlungsterminal 20 gehalten, so wird durch den Controller 11 eine Kommandofolge detektiert, welche beispielsweise eine Authentifikation zwischen Zahlungskarte 10 und Zahlungsterminal 20, gegebenenfalls auch einen Zahlungsbetrag der Transaktion umfassen kann. Eine derartige Kommandofolge, die in herkömmlicher Weise ablaufen kann, stellt die erste Information dar. Die Detektion des Austauschs der ersten Information durch die Zahlungskarte 10, insbesondere den Controller 11, ermöglicht die Feststellung der Durchführung der Transaktion der Zahlungskarte 10 mit dem Zahlungsterminal 20. Anschließend erfolgt durch den Controller 11 die Überprüfung des aktuellen Werts in dem Speicher 13. Wenn die Überprüfung des aktuellen Werts in dem Speicher 13 zum Ergebnis hat, dass der aktuelle Wert nicht ein vorher vorgegebener Endwert ist, so stellt die Transaktion eine genehmigte Transaktion dar und der aktuelle Wert in dem Speicher wird um 1 in Richtung des vorgegebenen Endwerts verändert. Beträgt der vorgegebene Wert beispielsweise 5 und stellt der vorgegebene Endwert 0 dar, erfolgt mit jeder genehmigten Transaktion eine Dekrementierung um 1 und der aktuelle Wert wird um 1 verringert. Der vorgegebene Wert könnte auch bei 0 starten, während der Endwert z.B. 5 beträgt. In diesem Fall wird mit jeder genehmigten Transaktion der aktuelle Wert um 1 erhöht. Wenn die Überprüfung des aktuellen Werts hingegen zum Ergebnis hat, dass der aktuelle Wert dem Endwert entspricht, so wird die Transaktion abgebrochen. Ist die Transaktion genehmigt, so wird diese in bekannter Weise abgewickelt. Insbesondere wird ein die Verweigerung oder Genehmigung repräsentierendes Kommando von der Zahlungskarte 10 an das Zahlungsterminal 20 übertragen.

Es kann in einer zweckmäßigen Ausgestaltung vorgesehen sein, dass eine Aktivierungsaufforderung durch den Controller 11 erzeugt und an das Zahlungsterminal 20 und/oder das Nutzerendgerät 30 zur Ausgabe übertragen wird, wenn die Transaktion abgebrochen wird oder wurde. Die Aktivierungsaufforderung ist dabei eine an den Nutzer gerichtete Aufforderung, die Anzahl der mit der Zahlungskarte 10 durchführbaren Transaktionen auf den vorgegebenen Wert zu setzen.

Um die Sicherheit für den Nutzer der Zahlungskarte weiter zu verbessern, kann zusätzlich vorgesehen sein, nicht nur die Anzahl der maximal erlaubten Transaktionen in dem Speicher 13 der Zahlungskarte zu hinterlegen, sondern auch einen erlaubten Geldbetrag der mit der Zahlungskarte 10 durchführbaren Transaktionen. So kann beispielsweise mittels der App oder durch das Betriebssystem des Nutzerendgeräts des Nutzers der Zahlungskarte 10 vorgesehen sein, zusätzlich einen erlaubten Geldbetrag der mit der Zahlungskarte 10 durchführbaren Transaktionen auf einen vorgegebenen Geldwert zu setzen (eine Art virtuelles Guthaben), indem der durch den Nutzer vorgegebene Geldwert dann ebenfalls als die zweite Information von dem Nutzerendgerät 30 an die Zahlungskarte 10 übertragen wird. Der vorgegebene Geldwert wird dann als aktueller Geldwert in dem Speicher 13 gespeichert. Beim Feststellen der Durchführung einer Transaktion der Zahlungskarte 10 mit dem Zahlungsterminal 30 wird dann zusätzlich durch den Controller 11 überprüft, ob der aktuelle Geldwert in dem Speicher 13 größer oder kleiner als der Transaktionsbetrag (Zahlbetrag der Transaktion) ist. Wenn die Überprüfung des aktuellen Geldwerts zum Ergebnis hat, dass der aktuelle Geldwert größer als der Transaktionsbetrag ist, so ist die Transaktion eine genehmigte Transaktion und der aktuelle Geldwert in dem Speicher wird um den Transaktionsbetrag verringert. Wenn der aktuelle Geldwert kleiner als der Transaktionsbetrag ist, wird hingegen die Transaktion abgebrochen. Ist die Transaktion genehmigt, so wird diese in bekannter Weise abgewickelt. Insbesondere wird ein die Verweigerung oder Genehmigung repräsentierendes Kommando von der Zahlungskarte 10 an das Zahlungsterminal 20 übertragen.

In einer Ausgestaltung, in der sowohl die Anzahl der möglichen Transaktionen als auch der maximal mögliche Geldwert durch den Nutzer vorgegeben werden, erfolgt die Prüfung des Geldwerts und der Anzahl der Transaktionen im Sinne einer mathematischen ODER-Operation. Mit anderen Worten bedeutet dies, dass beide Bedingungen positiv geprüft werden müssen, damit eine Transaktion als genehmigt gilt.

Es kann weiter vorgesehen sein, dass bei genehmigter Transaktion der nach der Transaktion aktuelle Wert und/oder aktuelle Geldwert an das Zahlungsterminal 20 und/oder das Nutzerendgerät 30 zur Ausgabe übertragen werden.

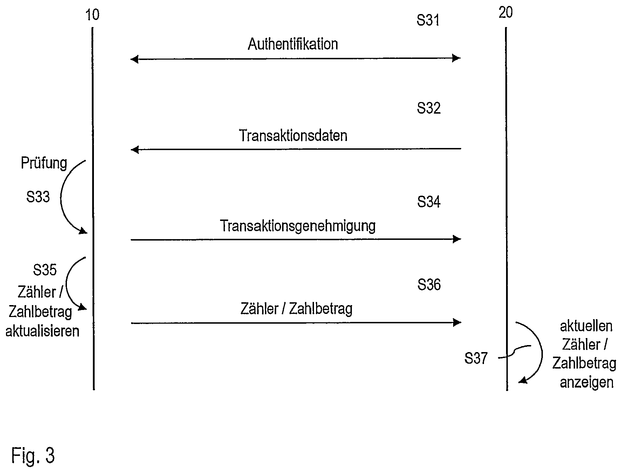

Dieses Vorgehen ist in den Figuren 2 und 3 nochmals visualisiert. Fig. 2 zeigt in einer schematischen Darstellung den Ablauf beim Setzen des Transaktionszählers und optional eines maximalen Geldbetrags zwischen der Zahlungskarte 10 und dem Nutzerendgerät 30. In einem Schritt S21 erfolgt eine optionale, aber bevorzugt durchgeführte Authentifikation zwischen Zahlungskarte 10 und Nutzerendgerät 30. Hierbei wird eine übliche Kommandofolge zwischen den beiden Kommunikationspartnern zur Durchführung sämtlicher Sicherheitsaspekte durchgeführt. In einem Schritt S22, der lediglich optional ist, kann der Nutzer auf Wunsch den aktuellen Wert des Zählers der noch möglichen Transaktionen aus der Zahlungskarte 10 auslesen. In einem Schritt S23 erfolgt das Setzen des Zählers (Transaktionszählers) als aktueller Wert in dem Speicher der Zahlungskarte 10. Optional kann zusätzlich oder alternativ ein Zahlbetrag in Schritt S24 als vorgegebener Geldwert gesetzt und in dem Speicher 13 der Zahlungskarte 10 hinterlegt werden. Das Auslesen und Setzen des Zählers des aktuellen Werts möglicher Transaktionen sowie des vorgegebenen Geldwerts erfolgt über eine auf dem Nutzerendgerät 30 ablaufende App oder das Betriebssystem.

Fig. 3 illustriert in schematischer Weise den Ablauf des Verfahrens im Rahmen einer Kommunikation zwischen der Zahlungskarte 10 und dem Zahlungsterminal 20. In einem Schritt S31 erfolgt eine Authentifikation zwischen Zahlungskarte und Zahlungsterminal 20, wenn die Zahlungskarte 10 in Kommunikationsreichweite des Zahlungsterminals 20 gebracht wurde. Die Kommunikation erfolgt, wie erläutert, drahtlos, z.B. mittels Bluetooth, BLE, NFC oder WiFi. Anschließend werden in einem Schritt S32 Transaktionsdaten ausgetauscht. Die Transaktionsdaten umfassen beispielsweise Identifikatoren der Zahlungskarte 10 sowie des Händlers 20, sowie einen Zahlbetrag. In einem Schritt S33 erfolgt eine Prüfung des aktuellen Werts und/oder des aktuellen Geldwerts in dem Speicher der Zahlungskarte 10, wobei die Prüfung durch den Controller 11 der Zahlungskarte 10 durchgeführt wird. Kommt die Überprüfung zum Ergebnis, dass eine genehmigte Transaktion vorliegt, so erfolgt in Schritt S33 eine an das Zahlungsterminal 20 übertragenen Transaktionsgenehmigung. In Schritt S35 wird durch den Controller 11 der Zahlungskarte 10 der aktuelle Wert in dem Speicher 13 um 1 in Richtung des vorgegebenen Endwerts verändert. Sofern auch ein aktueller Zahlbetrag in dem Speicher 13 hinterlegt ist, so wird der aktuelle Zahlbetrag (noch verfügbare Geldwert) in dem Speicher 13 um den Transaktionsbetrag verringert. Mit anderen Worten werden der Transaktionszähler und der Zahlbetrag aktualisiert. Zur Visualisierung des aktuellen Zählers und/oder Zahlbetrags werden die aktuellen Werte in Schritt S36 von der Zahlungskarte 10 an das Zahlungsterminal 20 übertragen und in Schritt S37 auf dem Display 23 des Zahlungsterminals 20 angezeigt. Schritt S35 kann auch vor Schritt S34 durchgeführt werden.

Das beschriebene Verfahren ermöglicht es, dass die Zahlungskarte 10 nur eine bestimmte Anzahl an Transaktionen zulässt, die unterhalb eines autorisierten Transaktionszählers liegen. Zudem kann auch beim Setzen eines maximalen Geldbetrags, unabhängig von der Anzahl der Transaktionen, auch maximal dieser Geldbetrag von der Karte abgebucht werden. Letzteres ermöglicht, auch wenn es sich bei der Zahlungskarte 10 nicht um eine vorbezahlte (Prepaid-)Zahlungskarte handelt, das Verhalten einer Prepaid-Karte und erhöht damit die Sicherheit des Nutzers.

## Patentansprüche

1. Verfahren zum Betreiben einer Zahlungskarte (10) ohne Nutzer-Authentisierung, die folgendes umfasst:
- einen Controller (11), der dazu ausgebildet ist, eine Transaktion der Zahlungskarte (10) mit einem Zahlungsterminal (20) zu ermitteln, und Sicherheitsmaßnahmen basierend auf der Anzahl an Transaktionen durchzuführen;
- eine Kommunikationseinheit (12), die dazu ausgebildet ist, auf kontaktlose Weise
= mit dem Zahlungsterminal (20) eine erste Information auszutauschen, die sich auf eine Transkation mit der Zahlungskarte (10) bezieht, und
= mit einem Nutzerendgerät (30) eines Nutzers der Zahlungskarte (10) eine zweite Information auszutauschen, die sich auf eine Anzahl von mit der Zahlungskarte (10) durchführbaren Transkationen bezieht;
- einen nicht-flüchtigen Speicher (13), der dazu ausgebildet ist, die Anzahl an durchgeführten oder noch durchführbaren Transaktionen zu speichern;
wobei das Verfahren die folgenden Schritte umfasst:
a) Setzen der Anzahl der mit der Zahlungskarte (10) durchführbaren Transkationen auf einen vorgegebenen Wert, indem der durch den Nutzer vorgegebene Wert als die zweite Information von dem Nutzerendgerät (30) an die Zahlungskarte (10) übertragen wird;
b) Speichern des vorgegebenen Werts der Anzahl an durchführbaren Transkationen als aktueller Wert in dem Speicher (13) der Zahlungskarte (10);
c) Feststellen der Durchführung einer Transkation der Zahlungskarte (10) mit dem Zahlungsterminal (20), indem die erste Information durch den Controller (11) ausgewertet wird;
d) Überprüfung des aktuellen Werts in dem Speicher (13) durch den Controller, wobei
- die Transaktion eine genehmigte Transaktion ist und der aktuelle Wert in dem Speicher (13) um Eins in Richtung eines vorgegebenen Endwerts verändert wird, wenn die Überprüfung des aktuellen Werts zum Ergebnis hat, dass der aktuelle Wert nicht der Endwert ist, und
- die Transaktion abgebrochen wird, wenn die Überprüfung des aktuellen Werts zum Ergebnis hat, dass der aktuelle Wert dem Endwert entspricht.

2. Verfahren nach Anspruch 1, **dadurch gekennzeichnet, dass** eine Aktivierungsaufforderung durch den Controller (11) erzeugt und an das Zahlungsterminal (20) und/oder das Nutzerendgerät (30) zur Ausgabe übertragen wird, wenn die Überprüfung des aktuellen Werts zum Ergebnis hat, dass der aktuelle Wert dem Endwert entspricht, wobei die Aktivierungsaufforderung eine an den Nutzer gerichtete Aufforderung ist, die Anzahl der mit der Zahlungskarte (10) durchführbaren Transkationen auf den vorgegebenen Wert zu setzen.

3. Verfahren nach Anspruch 1 oder 2, **dadurch gekennzeichnet, dass**
- in Schritt a) zusätzlich oder alternativ ein erlaubter Geldbetrag der mit der Zahlungskarte (10) durchführbaren Transkationen auf einen vorgegebenen Geldwert gesetzt wird, indem der durch den Nutzer vorgegebene Geldwert als die zweite Information von dem Nutzerendgerät (30) an die Zahlungskarte (10) übertragen wird, und
- der vorgegebene Geldwert in Schritt b) als aktueller Geldwert in dem Speicher (13) gespeichert wird.

4. Verfahren nach Anspruch 3, **dadurch gekennzeichnet, dass** in Schritt d) zusätzlich oder alternativ der aktuelle Geldwert in dem Speicher (13) durch den Controller überprüft wird, wobei
- die Transaktion eine genehmigte Transaktion ist und der aktuelle Geldwert in dem Speicher (13) um den Transaktionsbetrag verringert wird, wenn die Überprüfung des aktuellen Geldwerts zum Ergebnis hat, dass der aktuelle Geldwert größer als der Transaktionsbetrag ist, und
- die Transaktion abgebrochen wird, wenn die Überprüfung des aktuellen Werts zum Ergebnis hat, dass der aktuelle Geldwert kleiner als der Transaktionsbetrag ist.

5. Verfahren nach einem der vorhergehenden Ansprüche, **dadurch gekennzeichnet, dass** bei genehmigter Transaktion der nach der Transaktion aktuelle Wert und/oder aktuelle Geldwert an das Zahlungsterminal (20) und/oder das Nutzerendgerät (30) zur Ausgabe übertragen wird.

6. Verfahren nach einem der vorhergehenden Ansprüche, **dadurch gekennzeichnet, dass** der Schritt c) des Feststellens der Durchführung einer Transkation der Zahlungskarte (10) mit dem Zahlungsterminal (20) umfasst, dass eine Authentifizierung der Zahlungskarte (10) durch das Zahlungsterminal (20) durchgeführt wird und/oder ein Zahlbetrag von dem Zahlungsterminal (20) an die Zahlungskarte (10) übertragen wird.

7. Computerprogramm, das direkt in den internen Speicher eines digitalen Computers geladen werden kann und Softwarecodeabschnitte umfasst, mit denen die Schritte gemäß einem der vorhergehenden Ansprüche ausgeführt werden, wenn das Produkt auf dem Computer läuft.

8. Computerprogrammprodukt, das direkt in den internen Speicher eines digitalen Computers geladen werden kann und Softwarecodeabschnitte umfasst, mit denen die Schritte gemäß einem der vorhergehenden Ansprüche ausgeführt werden, wenn das Produkt auf dem Computer läuft.

9. Zahlungskarte (10) ohne Nutzer-Authentisierung, die folgendes umfasst:
- einen Controller (11), der dazu ausgebildet ist, eine Transaktion der Zahlungskarte (10) mit einem Zahlungsterminal (20) zu ermitteln, und Sicherheitsmaßnahmen basierend auf der Anzahl an Transaktionen durchzuführen;
- eine Kommunikationseinheit (12), die dazu ausgebildet ist, auf kontaktlose Weise
= mit dem Zahlungsterminal (20) eine erste Information auszutauschen, die sich auf eine Transkation mit der Zahlungskarte (10) bezieht, und
= mit einem Nutzerendgerät (30) eines Nutzers der Zahlungskarte (10) eine zweite Information auszutauschen, die sich auf eine Anzahl von mit der Zahlungskarte (10) durchführbaren Transkationen bezieht;
- einen nicht-flüchtigen Speicher (13), der dazu ausgebildet ist, die Anzahl an durchgeführten oder noch durchführbaren Transaktionen zu speichern;
wobei die Zahlungskarte (10) dazu ausgebildet ist,
- eine Anzahl an mit der Zahlungskarte (10) durchführbaren Transkationen auf einen vorgegebenen Wert zu setzen, nachdem der durch den Nutzer vorgegebene Wert als die zweite Information von der Zahlungskarte (10) empfangen wurde;
- den vorgegebenen Wert der Anzahl an durchführbaren Transkationen als aktuellen Wert in dem Speicher (13) zu speichern;
- die Durchführung einer Transkation der Zahlungskarte (10) mit dem Zahlungsterminal (20) festzustellen, indem die erste Information durch den Controller (11) ausgewertet wird;
- den aktuellen Wert in dem Speicher (13) durch den Controller zu überprüfen, wobei
- die Transaktion eine genehmigte Transaktion ist und der aktuelle Wert in dem Speicher (13) um Eins in Richtung eines vorgegebenen Endwerts verändert wird, wenn die Überprüfung des aktuellen Werts zum Ergebnis hat, dass der aktuelle Wert nicht der Endwert ist, und
- die Transaktion abgebrochen wird, wenn die Überprüfung des aktuellen Werts zum Ergebnis hat, dass der aktuelle Wert dem Endwert entspricht.

10. Zahlungskarte nach Anspruch 9, **dadurch gekennzeichnet, dass** die Zahlungskarte (10) dazu ausgebildet ist, eine Aktivierungsaufforderung durch den Controller (11) zu erzeugen und an das Zahlungsterminal (20) und/oder das Nutzerendgerät (30) zur Ausgabe zu übertragen, wenn die Überprüfung des aktuellen Werts zum Ergebnis hat, dass der aktuelle Wert dem Endwert entspricht, wobei die Aktivierungsaufforderung eine an den Nutzer gerichtete Aufforderung ist, die Anzahl der mit der Zahlungskarte (10) durchführbaren Transkationen auf den vorgegebenen Wert zu setzen.

11. Zahlungskarte nach Anspruch 9 oder 10, **dadurch gekennzeichnet, dass** die Zahlungskarte (10) dazu ausgebildet ist,
- zusätzlich oder alternativ einen erlaubten Geldbetrag der mit der Zahlungskarte (10) durchführbaren Transkationen auf einen vorgegebenen Geldwert zu setzen, indem der durch den Nutzer vorgegebene Geldwert als die zweite Information von dem Nutzerendgerät (30) an die Zahlungskarte (10) übertragen wird, und
- den vorgegebenen Geldwert als aktuellen Geldwert in dem Speicher (13) zu speichern.

12. Zahlungskarte einem der Ansprüche 9 bis 11, **dadurch gekennzeichnet, dass** die Zahlungskarte (10) dazu ausgebildet ist, zusätzlich oder alternativ den aktuellen Geldwert in dem Speicher (13) durch den Controller zu überprüfen, wobei
- die Transaktion eine genehmigte Transaktion ist und der aktuelle Geldwert in dem Speicher (13) um den Transaktionsbetrag verringert wird, wenn die Überprüfung des aktuellen Geldwerts zum Ergebnis hat, dass der aktuelle Geldwert größer als der Transaktionsbetrag ist, und
- die Transaktion abgebrochen wird, wenn die Überprüfung des aktuellen Werts zum Ergebnis hat, dass der aktuelle Geldwert kleiner als der Transaktionsbetrag ist.

13. Zahlungskarte einem der Ansprüche 9 bis 12, **dadurch gekennzeichnet, dass** die Zahlungskarte (10) dazu ausgebildet ist, bei genehmigter Transaktion den nach der Transaktion aktuellen Wert und/oder aktuellen Geldwert an das Zahlungsterminal (20) und/oder das Nutzerendgerät (30) zur Ausgabe zu übertragen.
